# EUROPÄISCHE PATENTSCHRIFT

(11) **EP 1 285 802 B1**
(45) Veröffentlichungstag und Bekanntmachung des Hinweises auf die Patenterteilung: **18.07.2007**
(21) Anmeldenummer: 02017972.7
(22) Anmeldetag: 10.08.2002
(51) Int. Cl.: B60J 7/20

(54) **Cabriolet-Fahrzeug mit einem unterhalb eines Deckelteils ablegbaren Dach**
Convertible vehicle with tiltable roof storable under a panel element
Véhicule convertible avec toit escamotable au dessous d'un panneau

(30) Priorität: 22.08.2001 DE 10140233
(43) Veröffentlichungstag der Anmeldung: 26.02.2003
(73) Patentinhaber: Wilhelm Karmann GmbH, 49084 Osnabrück (DE); ASC INCORPORATED, Southgate, Michigan 48195 (US)
(72) Erfinder: Heselhaus, Udo, 49479 Ibbenbüren (DE); Quindt, Reinhard, 48335 Michigan (US)
(74) Vertreter: Busse, Harald F.W.

(56) Entgegenhaltungen:
- EP-A- 1 084 885
- DE-A- 19 714 105
- US-A- 2 860 004

## Beschreibung

Die Erfindung betrifft ein Cabriolet-Fahrzeug mit einem unterhalb eines Deckelteils ablegbaren Dach nach dem Oberbegriff des Anspruchs 1 sowie des Anspruchs 4 und des Anspruchs 5.

Aus der DE 197 56 981 C2 ist ein Cabriolet-Fahrzeug bekannt, bei dem eine Verdeckkastenabdeckung insgesamt einerseits zur Freigabe einer Durchtrittsöffnung für das sich öffnende oder sich schließende Dach in einem mit der Fahrtrichtung einen spitzen Winkel einschließenden Öffnungssinn und andererseits zur Freigabe einer Beladeöffnung für einen Kofferraum in einem mit der Fahrtrichtung einen stumpfen Winkel bildenden Öffnungssinn beweglich ist.

Sowohl zur Freigabe der Kofferraumöffnung als auch zur Freigabe der Durchtrittsöffnung für das Dach muß die gesamte Verdeckkastenabdeckung bewegt werden. Dadurch sind die Antriebsorgane relativ groß auszulegen. Eine beispielsweise hydraulische Antriebsanlage benötigt einen hohen Raumbedarf für die Antriebe und den entsprechenden Hydraulikölvorrat. Zudem stellt sich das Problem, daß beim Aufschwenken der Verdeckkastenabdeckung zur Freigabe der Durchtrittsöffnung für das Dach das vordere Ende relativ hoch aufgeschwenkt wird, was in niedrigen Garagen hinsichtlich der Anschlaghöhe problematisch sein kann, etwa wann Lüftungsrohre oder andere Installationen die lichte Höhe einschränken.

Insbesondere bei solchen Cabriolet-Fahrzeugen, bei denen ein hinteres Dachteil, beispielsweise ein rückwärtiger Spannbügel eines teilweise oder vollständig flexiblen Faltverdecks, auf dem Verdeckkasten in geschlossener Stellung des Daches aufliegt, muß das rückwärtige Dachteil zunächst hinreichend weit angehoben werden, um ein Aufschwenken der Verdeckkastenabdeckung in der beschriebenen Weise zuzulassen, bei dem die vordere Kante der Verdeckkastenabdeckung in einem großen Schwenkradius aufwärts geführt wird. Dieses kann erst nach Abschluß der Abhebebewegung des rückwärtigen Dachteils durchgeführt werden, wodurch die Verdecköffnungs- und Schließbewegung einen relativ langen Zeitraum beansprucht. Zudem müssen langhubige Antriebsorgane auch für das hintere Dachteil vorgesehen sein.

Der Erfindung liegt das Problem zugrunde, ein Cabriolet-Fahrzeug der eingangs genannten Art derart weiterzubilden, daß die o.g. Nachteile vermindert werden.

Die Erfindung löst dieses Problem durch ein Cabriolet-Fahrzeug mit den Merkmalen des Anspruchs 1 bzw. mit den Merkmalen des Anspruchs 4, die insbesondere vorteilhaft in Kombination verwirklicht sein können, sowie mit den Merkmalen des Anspruchs 5, die ebenfalls in Kombination oder einzeln mit den Merkmalen der Ansprüche 1 und 4 verwirklicht sein können.

Mit dem Cabriolet-Fahrzeug nach Anspruch 1 ist gewährleistet, daß zur Freigabe der Durchtrittsöffnung für das Dach nicht die Verdeckkastenabdeckung als Ganzes vollständig aufgeschwenkt wird, sondern die Teile sich gegeneinander bewegen, wodurch der Energieaufwand vermindert ist und die Antriebsorgane entsprechend kleiner dimensioniert sein können. Auch bei Freigabe der Beladeöffnung für Gepäck muß nur ein relativ kleiner Teil bewegt werden, insofern ist der Energieaufwand hierfür gering. Diesbezügliche Antriebsmechanismen, welche nicht zwingend erforderlich sind, können daher ebenfalls kleinvolumig ausgeführt werden, was dem insgesamt zur Verfügung stehenden Kofferraum zugute kommt.

Insbesondere kann trotz der komplexen Bewegung der Teile der Verdeckkastenabdeckung lediglich ein Antriebsorgan vorgesehen sein, das die Gesamtbewegung bewirkt.

Wenn die Teile der Verdeckkastenabdeckung gemäß Anspruch 4 gegeneinander einschwenken, ist während der Freigabe der Durchtrittsöffnung für das Dach die insgesamt aufbauende Höhe der Verdeckkastenabdeckung deutlich vermindert. Auch in niedrigen Garagen besteht dann nicht mehr die Gefahr eines Anschlagens der Verdeckkastenabdeckung an die Garagendecke. Insbesondere wenn die Querfuge in etwa mittig in der Horizontalfläche der Verdeckkastenabdeckung liegt, kann deren Höhe jederzeit während des Öffnens oder Schließens des Daches geringer sein als die Höhe des Daches in geschlossener Stellung.

Wenn ein in Fahrtrichtung vorderes Teil, das das rückwärtige Dachteil untergreift, in einer im wesentlichen parallel oder leicht angewinkelt zur Fahrtrichtung verlaufenden Führungsbahn längsverschieblich ist, kann die Öffnung der Verdeckkastenabdeckung bei nur geringem Anheben oder auch aus der geschlossenen Stellung des rückwärtigen Dachteils heraus durchgeführt werden. Es ist nicht mehr wie bisher erforderlich, das rückwärtige Dachteil zunächst deutlich anzuheben, um den Schwenkradius für die vordere Kante der Verdeckkastenabdeckung freizugeben. Damit ist die Bewegung insgesamt beschleunigt. Diese Ausbildung kann beispielsweise auch verwirklicht sein, ohne daß die Teile gemäß Anspruch 2 gegeneinander einschwenken.

Trotz der längs verlaufenden Führungsschienen kann eine übliche Heckform mit einem verjüngenden Heck beibehalten werden, wenn die Lagerung der Verdeckkastenabdeckung in den Führungsbahnen derart gelenkig ausgebildet ist, daß auch quer zum Fahrzeug weisende Bewegungskomponenten durch die gelenkige Lagerung abfangbar sind.

Weitere Vorteile und Einzelheiten der Erfindung ergeben sich aus einem nachfolgend beschriebenen und in der Zeichnung dargestellten Ausführungsbeispiel des Gegenstandes der Erfindung.

In der Zeichnung zeigt:
- Fig. 1:: den Heckbereich eines erfindungsgemäßen Cabriolet-Fahrzeugs bei geschlossener Stellung des Daches in schematischer Seitenansicht,
- Fig. 2:: eine ähnliche Ansicht wie Fig. 1 während des Beginns der Dachöffnung;
- Fig. 3:: eine ähnliche Ansicht wie Fig. 2 bei weiter fortschreitender Dachöffnung,
- Fig. 4:: eine ähnliche Ansicht wie Fig. 1 bei geschlossenem Dach, jedoch geöffnetem hinterem Teil der Verdeckkastenabdeckung zur Freigabe einer Beladeöffnung für Gepäck,
- Fig. 5:: einen Schnitt entlang der Linie V-V in Fig. 1,
- Fig. 6:: einen Schnitt entlang der Linie VI-VI in Fig. 3,

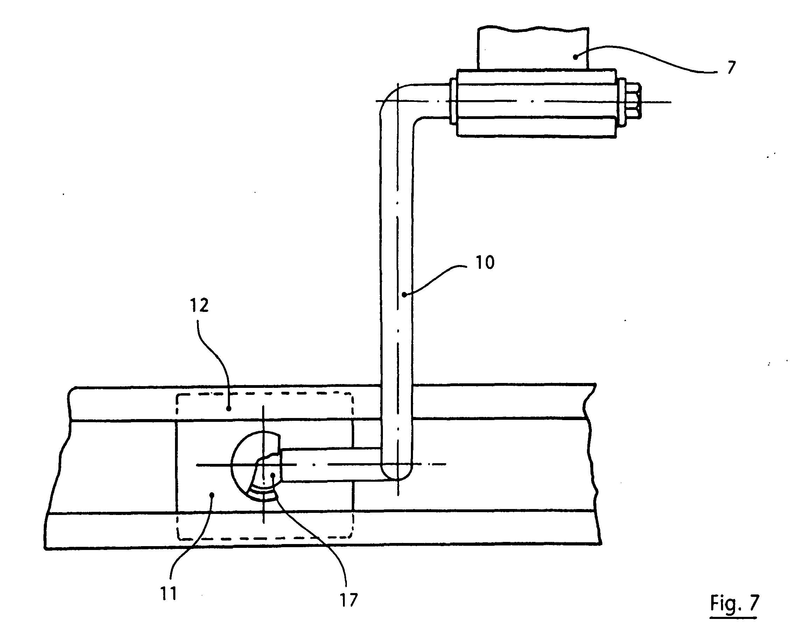

- Fig. 7:: eine Ansicht aus Richtung des Pfeils VII in Fig. 5.

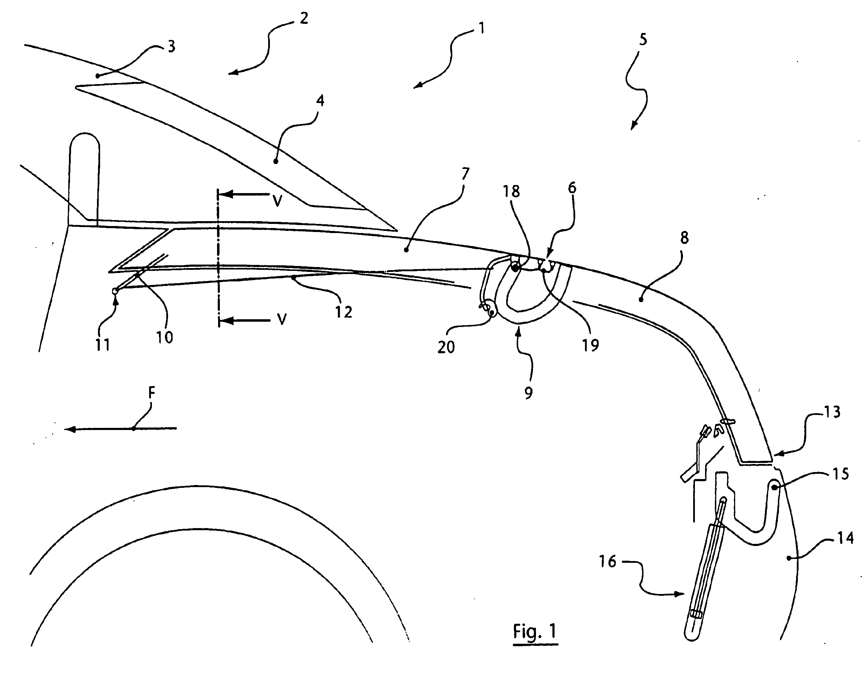

Das in Fig. 1 dargestellte Cabriolet-Fahrzeug 1 weist ein Dach 2 auf, das zumindest ein starres hinteres Dachteil 3 umfaßt. Das Dachteil 3 ist Träger einer Heckscheibe 4. Dabei kann das hintere Dachteil 3 insgesamt als Glaskuppel ausgebildet sein, wobei das Glas teilweise dunkel beschichtet sein kann.

Das Dach 2 ist insgesamt unterhalb einer Verdeckkastenabdeckung 5 ablegbar. Die Verdeckkastenabdeckung 5 ist durch ein mehrteiliges Deckelteil gebildet und umfaßt im Ausführungsbeispiel 2 an einer Querfuge 6 zwei voneinander separierte Teile 7, 8. Im geschlossenen Zustand ist das Teil 7 dem hinteren Teil 8 in Fahrtrichtung F vorgeordnet. Beide Teile 7, 8 der Verdeckkastenabdeckung 5 sind durch einen Drehpunkt 18 über ein Schwanenhalsschamier 9 miteinander verbunden und dekken neben einem Verdeckkasten auch einen Kofferraum mit ab. In der Querfuge 6 verläuft eine Wasserablaufrinne 19, die mit um den Drehpunkt 18 beweglich ist.

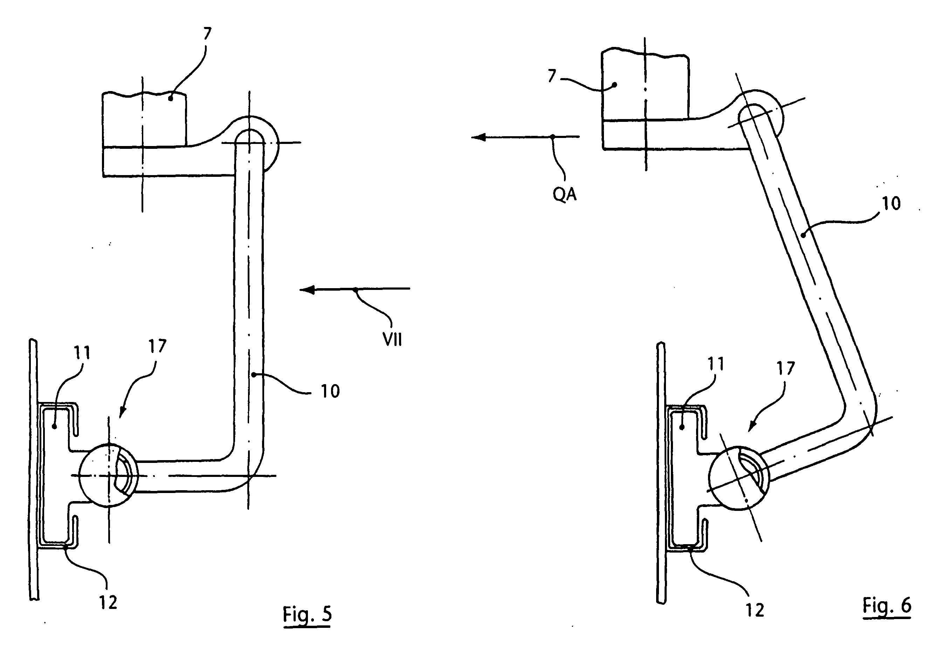

Das vordere Teil 7 ist über den Fahrzeugseiten zugeordnete Ausleger 10, an deren freien Enden sich Achsstummel, Gleitstücke oder dergleichen Lagerungselemente 11 befinden, in seitlichen Führungsbahnen 12, die sich im wesentlichen in Fahrzeuglängsrichtung erstrecken, abgestützt. Die Führungsleisten 12 können beispielsweise durch metallische Profile, die etwa C-förmig ausgebildet sein können, gebildet sein. Die Achsstummel, Gleitstücke oder andere Führungselemente 11, die in den Führungsschienen 12 längsverschieblich geführt sind, sind jeweils über ein Gelenk 17 mit dem Ausleger 10 verbunden. Dieses Gelenk 17 erlaubt ein Verschwenken des Auslegers 10 in Fahrzeugquerrichtung. Hierfür kann das Gelenk 17 beispielsweise als Kugelgelenk ausgebildet sein. Damit ist es möglich, daß die den Fahrzeugseiten zugeordneten Führungsschienen 12 sich nicht parallel zueinander erstrecken, sondern entgegen der Fahrtrichtung F aufeinanderzulaufen, wodurch ein Verjüngen des Fahrzeughecks möglich ist. In dem heckwärtigen, verjüngten Bereich schwenken dann die Gelenke 17 ein, wodurch die Ausleger 10 beispielsweise nicht mehr vertikal nach oben weisen, sondern zusätzlich eine in Fahrzeugquerrichtung nach außen weisende Komponente (in Richtung des Pfeils QA in Fig. 6) umfassen. Die Führungsbahnen 12 verlaufen insgesamt zum Fahrzeugheck hin leicht aufwärts im Sinne einer Schrägführung.

Der heckseitige Abschlußbereich 13 des hinteren Teils 8 der Verdeckkastenabdeckung 5 ist schwenkgelenkig gegenüber der Karosserie abgestützt. Dadurch ist das hintere Teil um eine quer zur Fahrtrichtung F liegende Achse 15 schwenkbar. Zur Bewirkung dieser Schwenkbewegung ist zumindest ein Antriebsorgan 16 vorgesehen, das beispielsweise als Hydraulikzylinder ausgebildet ist.

Um die Bewegung hinreichend verwindungsfrei ablaufen lassen zu können, sind vornehmlich zwei Antriebsorgane 16 vorgesehen, die den jeweiligen Fahrzeugseiten zugeordnet sind. Auch ein zentrales Antriebsorgan 16, das über ein Synchronisationsgestänge oder dergleichen auf beide Fahrzeugseiten wirkt, ist möglich.

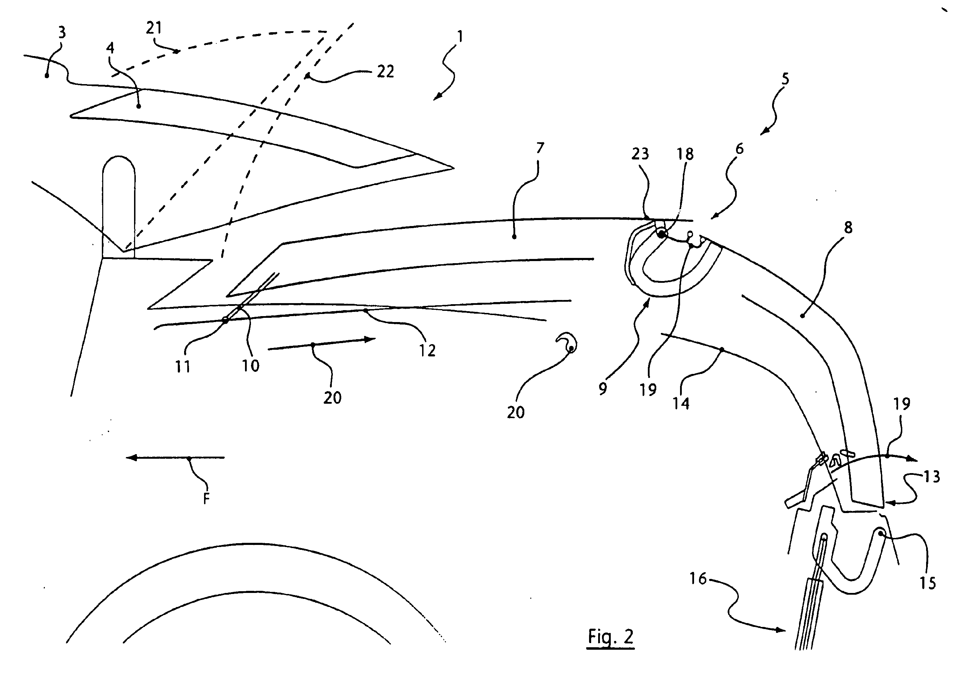

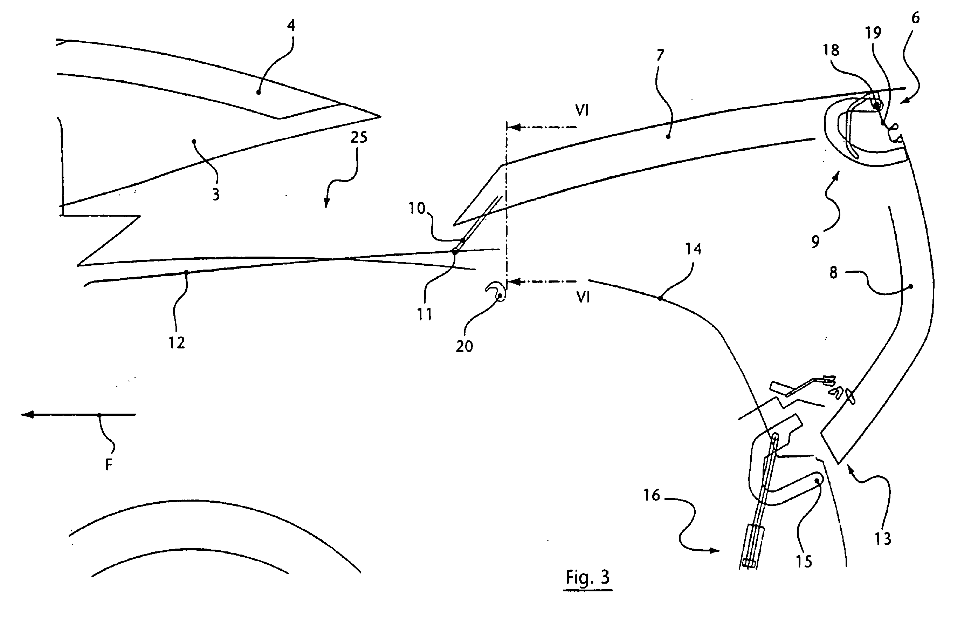

Um aus der geschlossenen Stellung gemäß Fig. 1 in die Öffnungsstellung zur Freigabe der Durchtrittsöffnung für das Dach gemäß Fig. 3 zu gelangen, ist zunächst ein Anheben des hinteren Dachteils 3 erforderlich, das im vorliegenden Ausführungsbeispiel als starrer Körper ausgebildet ist. Das hintere Dachteil 3 braucht dabei jedoch nur in einem relativ geringen Maß angehoben zu werden. In Fig. 2 ist gestrichelt das Anheben eines derartigen hinteren Dachteils 3 bei einer einteiligen Ausführung einer Verdeckkastenabdeckung 5 durch die Linien 21 angedeutet. Die vordere Kante der Verdeckkastenabdeckung würde sich dabei etwa entlang der Linie 22 aufwärts bewegen. Anhand dieser Darstellung wird deutlich, daß erfindungsgemäß das hintere Dachteil 3 nur um einen sehr geringen Winkel bzw. um ein sehr geringes Vertikalmaß von seiner Ausgangsstellung abgehoben werden muß. Die Abhebebewegung kann sowohl eine reine Schwenkbewegung als auch eine reine vertikale Hubbewegung als auch eine Mischbewegung aus beidem sein, etwa vermittelt über ein Gelenkparallelogramm. Nach Anheben des Dachteils wird der Kolben des Hydraulikzylinders 16 ausgefahren, wodurch das hintere Teil 8 des Gesamtdeckelteils 5 um die Schwenkachse 15 in Richtung des Pfeils 19 heckwärts verschwenkt wird. Durch die Kopplung der Teile 7, 8 der Verdeckkastenabdeckung 5 im Drehpunkt 18 wird zudem das vordere Teil 7 in Richtung des Pfeils 20 heckwärts gezogen, wobei durch die schräg aufwärts führende Neigung der Führungsschiene 12 ein leichtes Anheben des vorderen Teils 7 mit dieser Bewegung einhergeht. Alternativ können die Führungsschienen 12 auch heckwärts abwärts verlaufen, allerdings mit einem sich öffnenden Winkel zur Karosserieoberkante.

Sowohl das rückwärtige Teil als auch das vorgeordnete Teil 7 sind jeweils während der gesamten Öffnungsbewegung in Kontakt mit der Karosserie, das rückwärtige Teil über die Schwenkachse 15 und das zugehörige Gelenk, das vordere Teil 7 über die Ausleger 10, die in die Führungsschienen 12 eingreifen. Das vordere Dachteil 7 ist dabei mit seinem in Fahrtrichtung F vorderen Ende an der Karosserie 14 gehalten, so daß das hintere Ende 23 an der Trennfuge 6 von der Karosserie 14 abheben kann und gegenüber dem hinteren Teil 8 einschwenken kann. Die beiden Teile 7, 8 bewegen sich daher während der gesamten Öffnungsbewegung der Verdeckkastenabdeckung 5 relativ zueinander. Während also das hintere Teil 8 in üblicher Weise aufschwenkt, bewegt sich das vordere Ende des vorderen Teils 7 nicht mit aufwärts, sondern bleibt an der Karosserie abgestützt und mit dieser verbunden. Das Einschwenken der Teile 7, 8 gegeneinander bewirkt daher eine Verminderung der Öffnungshöhe.

Dabei ist nicht zwingend, daß das vordere Teil des Teils 7 während der Öffnungsbewegung an der Karosserie geführt ist. Auch ein freies Einschwenken des vorderen Teils 7 gegenüber dem hinteren Teil 8 wäre möglich. Mit der Führung an der Karosserie 14 ist allerdings erreicht, daß allein durch das Aufschwenken des rückwärtigen Teils 8 über das Antriebsorgan 16 zwangsgeführt die Einschwenkbewegung der Teile 8 und 7 gegeneinander erfolgt, ohne daß es zusätzlicher Mechanismen zur Einleitung dieser Bewegung bedürfte. Weitere Antriebsorgane, etwa für das Einschwenken der Teile 7 und 8 gegeneinander, sind damit entbehrlich. Der Montageaufwand ist minimiert.

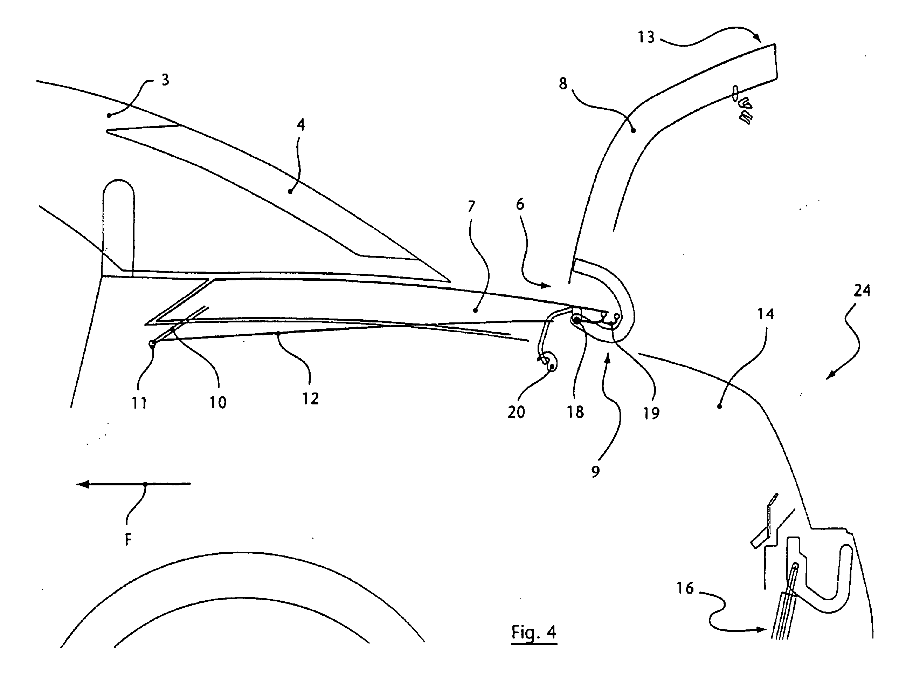

Zur Freigabe der Beladeöffnung für den Kofferraum (Fig. 4) bleibt im Ausführungsbeispiel, wie auch im Anspruch 1 dargelegt, der vordere Teil 7 in seiner Ausgangsstellung, wodurch auch ein auf diesem aufgesetztes hinteres Dachteil 3 in der Ausgangsstellung verbleiben kann. Um den vorderen Teil 7 in dieser Stellung zu sichern, ist eine Verriegelung 20 vorgesehen. Bei anderer Anordnung des hinteren Dachteils 3 wäre es auch möglich, daß zur Freigabe der Beladeöffnung 24 für den Kofferraum auch das vordere Teil 7 mit bewegt wird. Dann kann allerdings nicht ein Dachteil 3 auf diesem gehalten werden, sondern müßte vor diesem angeordnet sein. Eine besonders vorteilhafte Ausführung sieht dabei die Kombination der Verschwenkung der Teile 7, 8 gegeneinander mit der Ruhelage des vorderen Teils 7 bei Freigabe der Beladeöffnung 24 für den Kofferraum vor.

## Patentansprüche

1. Cabriolet-Fahrzeug (1) mit einem im rückwärtigen Fahrzeugbereich unterhalb einer Verdeckkastenabdeckung (5) ablegbaren Dach (2), wobei die Verdeckkastenabdeckung (5) einerseits zur Freigabe einer Durchtrittsöffnung (25) für das Dach und andererseits zur Freigabe einer Beladeöffnung (24) für einen Kofferraum beweglich ist, **dadurch gekennzeichnet, daß** die Verdeckkastenabdeckung (5) mehrteilig (7; 8) ausgebildet ist und zumindest eine im wesentlichen quer zur Fahrtrichtung F verlaufende Trennungsfuge (6) zwischen den Teilen (7; 8) umfaßt, wobei zur Freigabe der Durchtrittsöffnung (25) für das Dach (2) die mehreren Teile (7; 8) der Verdeckkastenabdeckung (5) gekoppelt sowohl gegenüber der Karosserie (14) als auch gegeneinander bewegbar sind und zur Freigabe der Beladeöffnung (24) für Gepäck zumindest ein in Fahrtrichtung (F) vorgeordneter Teil (7) der Verdeckkastenabdeckung (5) in Ruhestellung verbleibt.

2. Cabriolet-Fahrzeug nach Anspruch 1, **dadurch gekennzeichnet, daß** während der Freigabe der Durchtrittsöffnung (25) für das Dach (2) jedes Teil (7; 8)der Verdeckkastenabdeckung (5) an der Karosserie (14) beweglich gehalten ist.

3. Cabriolet-Fahrzeug nach Anspruch 2, **dadurch gekennzeichnet, daß** die Verdeckkastenabdeckung (5) zweiteilig ausgebildet ist und das rückwärtige Teil (8) schwenkgelenkig (15) und das vordere Ende (7) über eine Längsführung (12) an der Karosserie (14) gehalten ist.

4. Cabriolet-Fahrzeug (1) mit einem im rückwärtigen Fahrzeugbereich unterhalb einer Verdeckkastenabdeckung (5) ablegbaren Dach (2), wobei die Verdeckkastenabdeckung (5) einerseits zur Freigabe einer Durchtrittsöffnung (25) für das Dach (2) und andererseits zur Freigabe einer Beladeöffnung (24) für einen Kofferraum beweglich ist, insbesondere nach einem der Ansprüche 1 bis 3, **dadurch gekennzeichnet, daß** die Verdeckkastenabdeckung (5) zumindest zwei hintereinander angeordnete Teile (7; 8) umfaßt, die zur Freigabe der Durchtrittsöffnung (25) für das Dach (2) gegeneinander einschwenkbar sind.

5. Cabriolet-Fahrzeug (1) mit einem im rückwärtigen Fahrzeugbereich unterhalb einer Verdeckkastenabdeckung (5) ablegbaren Dach (2), wobei die Verdeckkastenabdeckung (5) einerseits zur Freigabe einer Durchtrittsöffnung (25) für das Dach und andererseits zur Freigabe einer Beladeöffnung für einen Kofferraum beweglich ist, insbesondere nach einem der Ansprüche 1 bis 4, **da**d**urch gekennzeichnet, daß** die Verdeckkastenabdeckung (5) mehrteilig ausgebildet ist und zumindest eine im wesentlichen quer zur Fahrtrichtung (F) verlaufende Trennungsfuge (6) zwischen den Teilen (7; 8) umfaßt und ein in Fahrtrichtung (F) vorderer Teil (7) der Verdeckkastenabdeckung (5) in einer im wesentlichen parallel oder leicht angewinkelt zur Fahrtrichtung (F) verlaufenden Führungsbahn (12) längsverschieblich ist.

6. Cabriolet-Fahrzeug nach Anspruch 5, **dadurch gekennzeichnet, daß** die Führungsbahn (12) heckwärts leicht aufwärts oder abwärts verläuft.

7. Cabriolet-Fahrzeug nach einem der Ansprüche 5 oder 6, **dadurch gekennzeichnet, daß** das vordere Ende des in Fahrtrichtung (F) vorderen Teils (7) der Verdeckkastenabdeckung (5) in der Führungsbahn (12) gelagert ist und während der Öffnungsphase der hintere Bereich des vorderen Teils anhebbar ist.

8. Cabriolet-Fahrzeug nach einem der Ansprüche 5 bis 7, **dadurch gekennzeichet, daß** jeder Fahrzeugseite eine Führungsbahn (12) zugeordnet ist und die Führungsbahnen sich heckwärts einander annähern.

9. Cabriolet-Fahrzeug nach Anspruch 8, **dadurch gekennzeichnet, daß** die Lagerung in den Führungsbahnen (12) derart gelenkig ausgebildet ist, daß durch das Gelenk (17) eine quer zum Fahrzeug weisende Bewegungskomponente abfangbar ist.

10. Cabriolet-Fahrzeug nach einem der Ansprüche 8 oder 9, **dadurch gekennzeichnet, daß** das Teil (7) des Verdeckkastendeckels (5) über kugelgelenkig (17) gelagerte Auslenker (10) in den Führungsschienen (12) gehalten ist.

## Claims

1. A cabriolet vehicle (1) with a roof (2) which can be folded down In the rear region of the vehicle beneath a hood compartment cover (5), the hood compartment cover (5) being movable on one hand to release a passage opening (25) for the roof and on the other hand to release a loading opening (24) for a boot, **characterised in that** the hood compartment cover (5) is constructed in several parts (7: 8) and comprises at least one dividing joint (6) between the parts (7; 8) which extends substantially transversely to the direction of travel F, the several parts (7; 8) of the hood compartment cover (5) being movable in coupled manner both with respect to the vehicle body (14) and towards each other in order to release the passage opening (25) for the roof (2), and in order to release the loading opening (24) for luggage at least one part (7) of the hood compartment cover (5) located to the fore in the direction of travel (F) remains in the rest position.

2. A cabriolet vehicle according to Claim 1, **characterised in that** during the release of the passage opening (25) for the roof (2) each part (7: 8) of the hood compartment cover (5) is held movably on the vehicle body (14).

3. A cabriolet vehicle according to Claim 2, **characterised in that** the hood compartment cover (5) is constructed in two parts and the rear part (6) is held on the vehicle body (14) via a pivot Joint (15) and the front end (7) via a longitudinal guide (12).

4. A cabriolet vehicle (1) with a roof (2) which can be folded down In the rear region of the vehicle beneath a hood compartment cover (5), the hood compartment cover (5) being movable on one hand to release a passage opening (25) for the roof (2) and on the other hand to release a loading opening (24) for a boot, in particular according to one of Claims 1 to 3, **characterised in that** the hood compartment cover (5) comprises at least two parts (7; 8) arranged one behind the other, which can be pivoted in towards one another to release the passage opening (25) for the roof (2).

5. A cabriolet vehicle (1) with a roof (2) which can be folded down in the rear region of the vehicle beneath a hood compartment cover (5), the hood compartment cover (5) being movable on one hand to release a passage opening (25) for the roof (2) and on the other hand to release a loading opening (24) for a boot, in particular according to one of Claims 1 to 4, **characterised in that** the hood compartment cover (5) is constructed in several parts and comprises at least one dividing joint (6) between the parts (7; 8) which extends substantially transversely to the direction of travel (F), and a front part (7) of the hood compartment cover (5) in the direction of travel (F) Is longitudinally displaceable in a guideway (12) extending substantially parallel or at a slight angle to the direction of travel (F).

6. A cabriolet vehicle according to Claim 5, **characterised in that** the guideway (12) extends slightly upwards or downwards towards the rear,

7. A cabriolet vehicle according to one of Claims 5 or B, **characterised in that** the front end of the front part (7) of the hood compartment cover (5) in the direction of travel (F) is mounted in the guideway (12) and during the opening phase the rear region of the front part can be lifted.

8. A cabriolet vehicle according to one of Claims 5 to 7, **characterised in that** one guideway (12) Is associated with each side of the vehicle and the guideways approach each other towards the rear.

9. A cabriolet vehicle according to Claim 8, **characterised in that** the mounting In the guideways (12) is articulated such that a movement component oriented transversely to the vehicle can be absorbed by the articulation (17).

10. A cabriolet vehicle according to one of Claims 8 or 9, **characterised in that** the part (7) of the hood compartment cover (5) is held In the guide rails (12) by means of extension arms (10) mounted in the manner of a ball-and-socket joint (17).

## Revendications

1. Véhicule décapotable (1) ayant une capote (2) pouvant être rangée dans la partie arrière du véhicule sous un capot (5) du coffre à capote, le capot (5) du coffre à capote pouvant être déplacé d'une part de manière à découvrir une ouverture de passage (25) pour la capote, et d'autre part de manière découvrir une ouverture de chargement (24) pour un coffre à bagages,
**caractérisé en ce que** le capot (5) du coffre à capote est réalisé en plusieurs éléments (7; 8) et comporte au moins une ligne de joint (6) entre les éléments (7; 8) s'étendant sensiblement au sens de la marche F, lesdits plusieurs éléments (7; 8) du capot (5) du coffre à capote pouvant être déplacés de façon couplée à la fois par rapport à la carrosserie (14) et l'un par rapport à l'autre pour découvrir l'ouverture de passage (25) pour la capote, et au moins un élément (7) du capot (5) du coffre à capote, qui est placé en avant dans le sens de la marche (F), restant au repos lorsque l'ouverture de chargement (24) dos bagages doit être découverte.

2. Véhicule décapotable selon la revendication 1, **caractérisé en ce que**, pendant la découverte de l'ouverture de passage (25) pour la capote (2), chaque élément (7; 8) du capot (5) du coffre à capote est maintenu de façon mobile sur la carrosserie.

3. Véhicule décapotable selon la revendication 2, **caractérisé en ce que** le capot (5) du coffre à capote est réalisé en deux éléments, et que l'élément arrière (8) est monté de façon articulée pivotante (15) sur la carrosserie (14), et que l'élément avant (7) y est monté par l'intermédiaire d'un guidage longitudinal (12).

4. Véhicule décapotable (1) ayant une capote (2) pouvant être rangée dans la partie arrière du véhicule sous un capot (5) du coffre à capote, le capot (5) du coffre à capote pouvant être déplacé d'une part de manière à découvrir une ouverture de passage (25) pour la capote, et d'autre part de manière découvrir une ouverture de chargement (24) pour un coffre à bagages, notamment selon l'une des revendications 1 à 3,
**caractérisé en ce que** le capot (5) du coffre à capote comprend au moins deux éléments (7; 8) disposés l'un derrière l'autre, qui peuvent être repliés en pivotant l'un contre l'autre de manière à découvrir l'ouverture de passage (25).

5. Véhicule décapotable (1) ayant une capote (2) pouvant être rangée dans la partie arrière du véhicule sous un capot (5) du coffre à capote, le capot (5) du coffre à capote pouvant être déplacé d'une part de manière à découvrir une ouverture de passage (25) pour la capote, et d'autre part de manière découvrir une ouverture de chargement pour un coffre à bagages, notamment selon l'une des revendications 1 à 4,
**caractérisé en ce que** le capot (5) du coffre à capote est réalisé en plusieurs éléments et comprend au moins une ligne de joint (6) s'étendant transversalement au sens de la marche (F) entre les éléments (7; 8), et qu'un élément avant (7) du capot (5) du coffre à capote, vu dans le sens de la marche (F), peut être déplacé longitudinalement dans un chemin de guidage (12) s'étendant essentiellement parallèlement au sens de la marche (F), voire sous un léger angle par rapport à celui-ci.

6. Véhicule décapotable selon la revendication 5, **caractérisé en ce que** le chemin de guidage (12) est légèrement incliné vers le bas ou vers le haut, d'avant en arrière du véhicule.

7. Véhicule décapotable selon l'une des revendications 5 ou 6, **caractérisé en ce que** l'extrémité avant de l'élément avant (7) du capot (5) du coffre à capote, vu dans le sens de la marche (F), est logé dans le chemin de guidage (12), et que, pendant la phase d'ouverture, la partie arrière de l'élément avant peut être soulevée.

8. Véhicule décapotable selon l'une des revendications 5 à 7, **caractérisé en ce qu'**un chemin de guidage (12) est associé à chaque côté du véhicule, et que les chemins de guidage se rapprochent l'un de l'autre vers l'arrière du véhicule.

9. Véhicule décapotable selon la revendication 8, **caractérisé en ce que** le montage dans les chemins de guidage (12) est réalisé de façon articulée do manière telle que l'articulation (17) permette d'absorber une composante de mouvement qui est dirigée transversalement au véhicule.

10. Véhicule décapotable selon l'une des revendications 8 ou 9, **caractérisé en ce que** l'élément (7) du capot (5) du coffre à capote est monté dans les rails de guidage (12) par l'intermédiaire de bras de commande (10) montés à rotule (17).
